# EUROPEAN PATENT APPLICATION

(11) **EP 2 568 550 A2**
(43) Date of publication of application: **13.03.2013**
(21) Application number: 12183605.0
(22) Date of filing: 07.09.2012
(51) Int. Cl.: H02G 1/00

(54) **A Hand Tool**

(30) Priority: 12.09.2011 AU 2011101170
(71) Applicant: West, Nathan Brent, Wyongah, New South Wales 2259 (AU)
(72) Inventor: West, Nathan Brent, Wyongah, New South Wales 2259 (AU)
(74) Representative: Bridge-Butler, Jeremy

(57) **Abstract**

A hand tool (1) having an opposing pair of longitudinally extending arms (3). The arms (3) hingedly connected together at a central point (4). The arms (3) having first ends (5) to be gripped by a user and second ends (6) having contact surfaces (10) to engage an object. The sensing means (9) operatively associated with said contact surfaces (10). Alarm means (15, 20, 23) operatively associated with the sensing means (9). The alarm means (15, 20, 23) are adapted to alert a user when a voltage is sensed by said sensing means (9).

## Description

The present invention relates to hand tools and in particular to a voltage sensing hand tool.

Hand tools are used throughout the world and come in various shapes and sizes. One common factor with such hand tools is that typically have one or more parts made of metal. This creates problems particularly for electricians. Every year many electricians cut through or come into contact with cabling dangering their lives and the lives of others as the hand tools have metal parts. When you cut through a live cable the hand tool, such as a pair of pliers, is typically destroyed requiring the user to buy a new tool. There are a significant number of deaths worldwide from electricians contacting live cables or injuring themselves using hand tools. Though some tools have rubber sleeves on the handle, in many cases this material is insufficient to stop electrical shocks occurring particularly at high voltage.

There is a need for a hand tool to reduce such injuries and deaths by alerting the user to live voltage.

It is an object of the present invention to substantially overcome or at least ameliorate one or more of the disadvantages of the prior art, or to at least provide a useful alternative.

There is firstly disclosed herein a hand tool having: an opposing pair of longitudinally extending arms; said arms hingedly connected together at a central point; said arms having first ends to be gripped by a user and second ends having contact surfaces to engage an object; sensing means operatively associated with said contact surfaces; alarm means operatively associated with said sensing means, said alarm means adapted to alert a user when a voltage is sensed by said sensing means and energising means to energise said sensing and alarm means.

Preferably, said alarm means includes an LED.

Preferably, said alarm means includes an audible speaker.

Preferably, said alarm means includes a vibration device.

Preferably, said sensing means are located within said contact surfaces.

Preferably, said contact surfaces are cutting blades.

Preferably, said energizing means is a battery.

Preferably, said battery is located in at least one said arms.

A preferred embodiment of the present invention will now be described, by way of an example only, with reference to the accompanying drawings wherein:

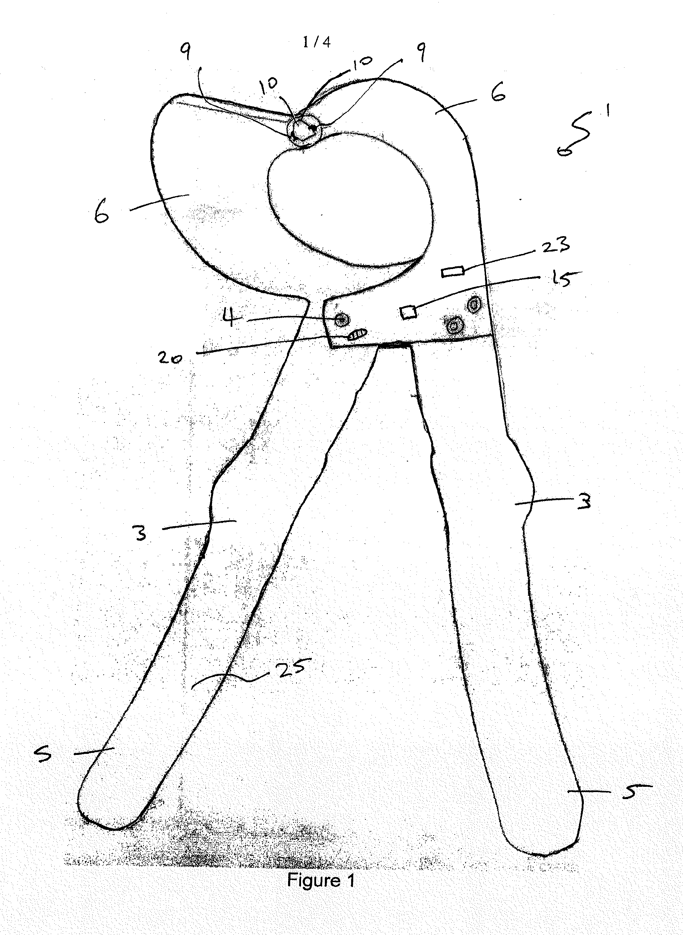

Figure 1 is a top view of a hand tool of an embodiment of the present invention;

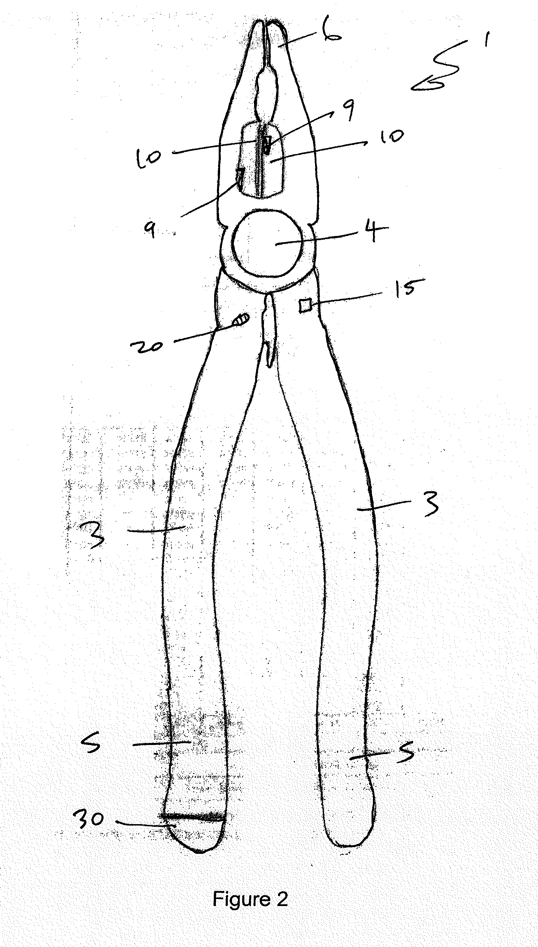

Figure 2 is a top view of a hand tool of another embodiment of the present invention;

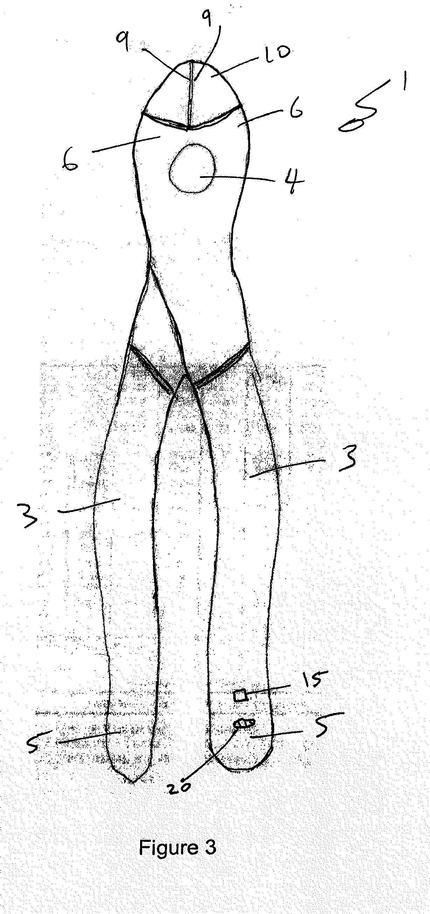

Figure 3 is a top view of a hand tool of another embodiment of the present invention; and

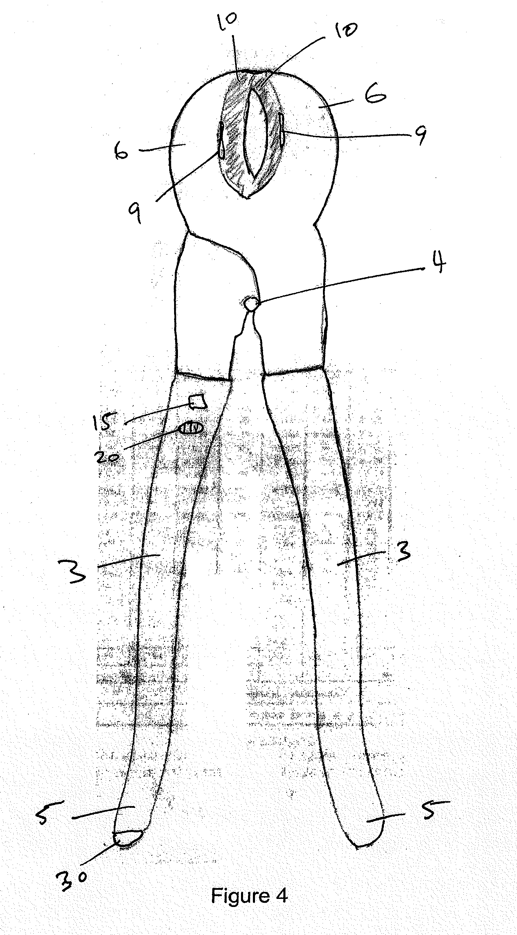

Figure 4 is a top view of a hand tool of another embodiment of the present invention;

There is schematically depicted in the drawings, a hand tool 1 having an opposing pair of longitudinally extending arms 3, the arms 3 hingedly connected together at a central point 4. The arms 3 having first ends 5 to be gripped by a user and second ends 6 having contact surfaces 10 to engage an object (not shown). The tool 1 includes sensing means 9 operatively associated with contact surfaces 10. Alarm means 15, 20, 23 advises a user when a voltage is sensed by the sensing means 9. The tool 1 further includes energizing means 25 to energize the sensing means 9 and alarm means 15, 20, 23. In the preferred form, the alarm means 15, 20, 23 would include an LED 15 and/or an audible speaker 20 and/or a vibration device 23. However, other typical types of alarms could be utilized to advise the user of a voltage occurring across the sensing means 9 and contact surfaces 10. In the preferred form, the sensing means 9 are located within the contact surfaces 10 and the contact surfaces 10 typically include cutting blades of the tool 1. In the preferred form, the energizing means 25 would be a battery or the like located in the arms 3. The battery could be re-chargeable or not. The battery 25, sensing means 9 and alarm means 15, 20, 23 would be connected together by electrical wiring (not shown) extending along the arms 3. In an alternate arrangement, the LED 15 and audio speaker 20 could be programmed in typical ways for sensing voltage across the sensing means 9 so that in an alternate arrangement, the arms 3 would be hollow so that they can easily receive electronic componentry to assist with the operation of the tool 1. The end of one of the arms 3 could include a cap 30 or the like that can be unscrewed to replace the battery 25.

The present invention therefore provides a voltage sensing hand tool 1 for an electrician or other user. The voltage sensing tool 1 will alert the user when voltage is present between the cutting blades 10 of the tool 1 by means of the LED light 15 and an audible alarm (primarily AC voltage) 20. The voltage sensing electronics (not shown) in the preferred form will be housed in the arms 3 of the tool 1 as well as a battery 25 or the like. The sensing wire (not shown) will typically run from the electronics in the arms 3 to the cutting edge 10 of the tool 1 via a mill trench or the like (not shown) in the arms 3. There will also be a milled section in the cutting edge 10 of the tool 1 to house the sensing wire (not shown). The trench or trenches (not shown) will be filled with resin or the like to enclose the sensing wire and to insulate them from the metal of the tool 1. The electronics will also be encapsulated in resin or the like to increase strength of the tool 1.

Although the invention has been described with reference to specific examples, it will be appreciated by those skilled in the art that the invention may be embodied in many other forms.

## Claims

1. A hand tool having:
an opposing pair of longitudinally extending arms;
said arms hingedly connected together at a central point;
said arms having first ends to be gripped by a user and second ends having contact surfaces to engage an object;
sensing means operatively associated with said contact surfaces;
alarm means operatively associated with said sensing means, said alarm means adapted to alert a user when a voltage is sensed by said sensing means and energising means to energise said sensing and alarm means.

2. The hand tool according to claim 1, wherein said alarm means includes an LED.

3. The hand tool according to claim 1, wherein said alarm means includes an audible speaker.

4. The hand tool according to claim 1, wherein said alarm means includes a vibration device.

5. The hand tool according to claim 1, wherein said sensing means are located within said contact surfaces.

6. The hand tool according to claim 1, wherein said contact surfaces are cutting blades.

7. The hand tool according to claim 1, wherein said energizing means is a battery.

8. The hand tool according to claim 7, wherein said battery is located in at least one said arms.
